# EUROPEAN PATENT APPLICATION

(11) **EP 0 885 709 A1**
(43) Date of publication of application: **23.12.1998**
(21) Application number: 97830699.1
(22) Date of filing: 23.12.1997
(51) Int. Cl.: B29C 45/30

(54) **An injection nozzle with torpedo housed in a duct intersecting the feed channel**

(30) Priority: 19.06.1997 IT AN970034
(71) Applicant: ACRILUX S.p.A., I-62019 Recanati (IT)
(72) Inventor: Belles, Paolo, Macerata (IT); Moretti, Sergio, Recanati (MC) (FR); Cingolani, Nazzareno, Recanati (MC) (FR)
(74) Representative: Baldi, Claudio

(57) **Abstract**

This invention concerns an injection nozzle for moulding thermoplastic materials fitted with a "torpedo" (4) fitted in a housing (5) next to the feed channel (2) and intersecting the latter at a point immediately upstream the injection hole (3) so that the tip (4a) of the "torpedo" (4) penetrates transversally into said hole (3) without obstructing the same completely.

## Description

This design patent application concerns an injection nozzle for moulding thermoplastic materials fitted with a "torpedo" housed in a duct intersecting the feed channel of the nozzle.

The nozzle in question is of the type generally known in the sector as "torpedo" nozzles and is characterised by a tapered heated body (the so-called torpedo) positioned in the supply channel and terminating with its end against the centre of the injection hole of the mould.

This special type of "torpedo" nozzle is designed to resolve in some way two typical problems which occur with standard nozzles (namely those without "torpedo") when the mould is opened after injection.

The first problem is the uncontrolled dripping of moulding material through the injection hole of the nozzle as a result of the slight residual pressure in the material which remains in the feed channel of the nozzle even after injection.

In addition to the above dripping problem, often when the mould is opened threads of thermoplastic material are produced which are pulled off with the moulded part from the hole of the injection nozzle.

Another and no less serious problem is the formation of an irregular swell on the external surface of the part on the injection point area caused when the injection jet breaks at the separation section between the hot material remaining in the nozzle and the cold material in the moulded part.

In order to remove this swell mechanically the part must be rubbed and polished.

It is evident that longer the part is cooled in the injection hole of the nozzle the larger the swelling will be.

Accordingly to resolve the above problem a tapered body (known as "torpedo") whose tip terminates at the centre of the injection hole, suitably heated to keep the material remaining in said hole hot and fluid is fitted in the feed channel so that the break section is as close as possible to the surface of the part consequently reducing the dimensions of the above swelling considerably.

The use of a "torpedo" in the feed channel however introduces another series of problems: firstly the reduction of the cross-section of the feed channel in proximity of the "torpedo" produces a considerable loss of load during injection; secondly the radial plates which fix said "torpedo" to the walls of the feed channel produce the same number of deviations in the fluid vein of material flowing in said channel.

The greater the speed and direction variations of the flowing fluid, the greater the irregularity of the feed in the mould will be, with consequent faults in the moulded part such as irregularities in the thickness or temperatures which cause strain and the formation of welding lines between the fluid threads which are thermically unstable.

It should be noted moreover that the correct position of the "torpedo" in the feed channel of the nozzle is not simple to achieve in that it must be selected in order to meet both contrasting requirements at the same time.

When the mould is opened, in order to prevent dripping and the formation of moulding threads at the injection hole of the nozzle, the tip of the "torpedo" must be pushed deep into said hole so as to plug most of the space through which material can flow; the forward positioning of the tip also ensures that the break of the jet is towards the further end of the injection hole since the material remaining in the same is kept hot by the heated tip of the "torpedo".

Excessive obstruction of the injection hole can however produce insupportable losses of load during injection and subject the material to elevated thermal stress and strain due to overheating as a result of the increase in speed caused by reduction of the cross-section of the inner passage of the feed channel.

For all the above reasons the positioning of the "torpedo" in the nozzle becomes a compromise between contrasting requirements.

The purpose of this invention is to design a new "torpedo" model which reduces potential irregularity in speed and direction of the fluid flow in the distribution channel.

A further scope of the invention is to realise a new "torpedo" model whereby the "torpedo" performs alternating rectilinear strokes so as to assume a maximum backward position during injection and a maximum forward position during opening of the mould.

The first of the above objectives is attained by placing the "torpedo" in its own duct next to the supply channel and intersecting the latter at a point immediately upstream the injection hole so that the tip of the "torpedo" penetrates, transversally, said hole, without obstructing it completely.

Thanks to said positioning and inclination of the "torpedo" the radial plates required to support the "torpedo" in a central and coaxial position with respect to the feed channel have been eliminated, so that in the nozzle according to the invention the fluid flow which passes through the feed channel of the nozzle undergoes a single deviation, namely that required to pass around the tip of the "torpedo".

The second objective was attained by allowing the "torpedo" to slide in its duct at an inclined axis; more precisely said "torpedo" is constantly subject to the thrust of an expulsion spring which keeps it in its forward end of stroke position deep in the injection hole without however obstructing the same.

Said spring is calibrated so that the pressure at which the moulding material is injected is sufficient to overcome the antagonist thrust of the spring and consequently move the "torpedo" backwards.

In this way it is possible to reduce the loss of load and material stress considerably during injection as well as the risk of dripping and threading when the mould is opened.

For major clarity the description of the nozzle according to the invention continues with reference to the enclosed table which are intended for purposes of illustration and not in a limiting sense, whereby:
- figure 1 is a cross-section of the nozzle according to the invention on an axial plane passing through the axis of the feed channel and the axis of the duct housing the "torpedo" which in this embodiment is fixed;
- fig. 2 is similar to fig. 1 but refers to an alternative embodiment whereby the "torpedo" slides in its housing duct.
- fig. 3 is a cross-section of the nozzle according to the invention on axial plane III-III of fig. 1, passing through the axis of the feed channel and perpendicular to the axis of the duct of the "torpedo".
- fig. 4 is similar to fig. 1 but refers to an embodiment of the nozzle adopting a "torpedo" whose tip is shaped to partially obstruct the injection hole symmetrically.

With reference to the above figures the nozzle according to the invention includes a conventional metal body (1) intersected at the centre by the feed channel (2) in which the moulding material flows, and terminating with an injection hole (3).

The body (1) is provided with conventional deep channels (1a) for housing conventional electric and heater plugs and for the circulation of a heating fluid.

The nozzle according to the invention is characterised by a "torpedo" (4) housed in a duct (5) having inclined axis which intersects said feed channel (2) at a point immediately upstream of the injection hole (3).

The tip (4a) of the "torpedo" (4) fits transversally in said hole (3) without however obstructing the space through which the liquid passes completely.

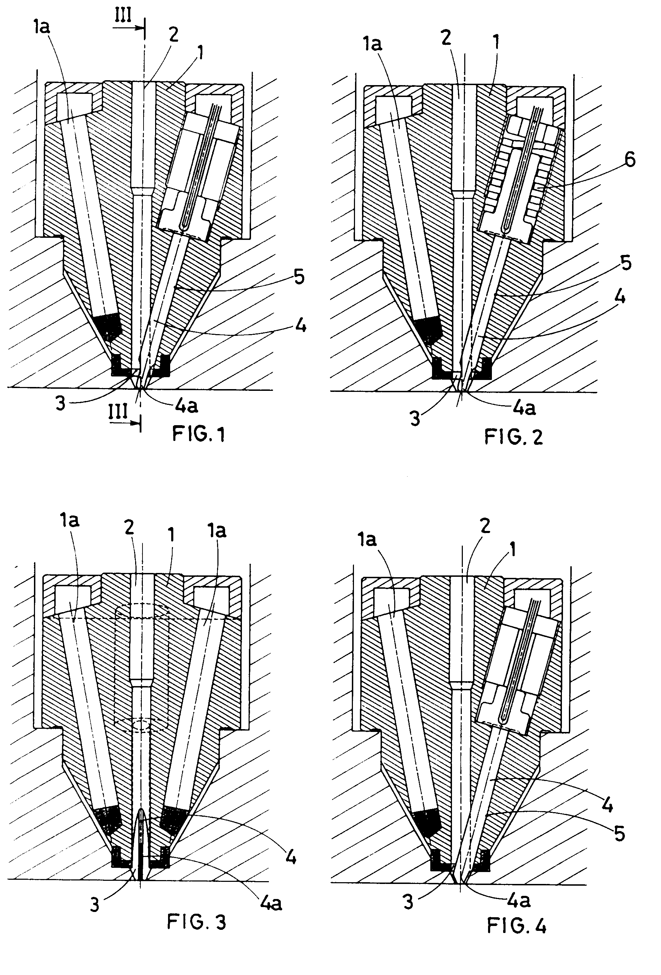

It should be noted that the tip (4a) of the "torpedo" may be tapered to differing extents or even flattened like a knife blade as shown in fig. 3 so as to reduce obstruction of the hole (3) as far as possible during injection while ensuring when the mould is opened adequate heating of the moulding material remaining in hole (3).

In the embodiment shown in fig. 4, the tip (4a) of "torpedo" (4) is shaped so as to allow a symmetric space at the injection hole.

In the embodiment shown in fig. 1, the 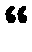 torpedo 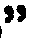 (4) is fixed in its housing duct (5) while in the embodiment shown in fig. 2, the "torpedo" (4) is free to slide in the duct (5).

The second embodiment provides the use of a spring (6) which presses the "torpedo" constantly forward keeping it in its maximum forward position.

Said spring (6) is calibrated so that the pressure created in the feed channel (2) during injection is sufficient to overcome the resistance of the spring (6) so that the "torpedo" (4) automatically tends to move back and maintain is backward end of stroke position during injection.

When the injection pressure is reduced, said spring (6) pushes the "torpedo" (4) forward so that the tip (4a) fits into the injection hole (3) without however obstructing it completely thereby preventing the risk of dripping and threading of material through the hole (3) when the mould is open.

## Claims

1. An injection nozzle with "torpedo" housed in a duct intersecting the feed channel of the nozzle of the type including a heated metal body (1) intersected at the centre by the feed channel (2) terminating with an injection hole (3) obstructed partially by the tip (4a) of a "torpedo" (4) characterised in that said "torpedo" (4) is housed in a duct (5) having inclined axis which intersects said feed channel (2) at a point immediately upstream the injection hole (3) so that its tip (4a) fits transversally in the injection hole (3) without however obstructing the space through which the material flows completely.

2. A nozzle according to the previous claim characterised in that the "torpedo" (4) is fixed in its housing duct (5).

3. A nozzle according to claim 1) characterised in that the "torpedo" (4) slides in its housing (5) and is subject to the expelling thrust of a spring (6) calibrated so that the pressure in the feed channel (2) during injection is sufficient to overcome the resistance of the spring (6).
